# EUROPÄISCHE PATENTSCHRIFT

(11) **EP 0 848 569 B1**
(45) Veröffentlichungstag und Bekanntmachung des Hinweises auf die Patenterteilung: **20.06.2012**
(21) Anmeldenummer: 97118394.2
(22) Anmeldetag: 23.10.1997
(51) Int. Cl.: H04Q 11/04, H04L 12/56

(54) **Diensteintegrierendes Kommunikationsnetzwerk im Zugangsbereich**
Integrated service communication network at the access area
Réseau de télécommunication à intégration de services au domaine de l'accès

(30) Priorität: 12.12.1996 DE 19651638
(43) Veröffentlichungstag der Anmeldung: 17.06.1998
(73) Patentinhaber: Deutsche Telekom AG, 53113 Bonn (DE)
(72) Erfinder: Bockmann, Ulrich, Ing.-grad., 53119 Bonn (DE); Weiss, Klaus Bernd, Dipl.-Ing., 53129 Bonn (DE)

(56) Entgegenhaltungen:
- WO-A-96/17476
- DE-C- 4 436 818
- THEIMER T J ET AL: "A FLEXIBLE ATM-BASED ACCESS NETWORK ARCHITECTURE" ISSLS. INTERNATIONAL SYMPOSIUM ON SUBSCRIBER LOOPS AND SERVICES,AU,MILSONS POINT, IREEA, Bd. SYMP. 11, Seite 245-250 XP000698328
- MAHER A: "AUFBRUCH IN DIE MULTIMEDIA-WELT" TELCOM REPORT,DE,SIEMENS AG. MUNCHEN, Bd. 18, Nr. 4, Seite 177-179 XP000527704 ISSN: 0344-4724

## Beschreibung

Die Erfindung betrifft ein diensteintegrierendes Kommunikationsnetzwerk im Zugangsbereich

Die sich derzeit entwickelnde Informationsgesellschaft macht auch einen Ausbau bestehender Netze im Zugangsbereich erforderlich. Die bestehenden Netzwerke lassen sich gemäß ihrer Funktion und Auslegung in zwei Klassen unterteilen: Zum einen gibt es die Netze der Verteilkommunikation, beispielsweise Netze für Kabelfernsehen- und Radio. Von der zentralen Einspeisungsstelle werden die analogen oder digitalen Daten dem langreichweitigen Zubringernetz zugeführt, von wo die Daten an einem Netzknoten in den Zugangsbereich eingespeist und zu einem Leitungs-Konzentrationspunkt in räumlicher Nähe (einige 100 m) zum Kunden geführt werden. Dort werden die Daten gegebenenfalls nochmals verarbeitet, z.B. verstärkt, und dann zum Anwender übertragen und ihm am Netzabschluß zur Verfügung gestellt. Diese Netze sind im anwenderseitigen Zugangsbereich passiv, d.h. im allgemeinen ohne die bidirektionale Möglichkeit der Einflußnahme des Kunden auf die ihm zur Verfügung gestellten Daten (Daten-Einbahnstraße). Da die Daten der Verteilkommunikation, z.B. Fernsehen, Radio, eine hohe Frequenzbandbreite aufweisen, spricht man auch vom Breitbandkabel-Netz; der entsprechende Leitungs-Konzentrationspunkt wird Curb oder C-Verstärker genannt. Die Leitungen des Breitbandkabelnetzes vom Netzknoten zum C-Verstärker und von dort zum Kunden sind in der Regel Kupfer-Koaxialkabel, teilweise auch Glasfasern.

Die zweite Netzklasse umfaßt Netze für Individualkommunikation, insbesondere das bidirektionale Telefonnetz. Die Daten werden dabei über einen oder mehrere Netzknoten von einem Anwender zu einem (oder mehreren) anderen übertragen. In räumlicher Nähe zum Kunden werden die Leitungen wie bei den Netzen der Verteilkommunikation zu einem Leitungs-Konzentrationspunkt, dem sogenannten Kabelverzweiger, zusammengeführt und von dort zum Anwender geführt und an einem Netzabschluß zur Verfügung gestellt. Die Leitungen vom Kunden zum Konzentrationspunkt sind in der Regel Kupfer-Doppeladern und die Leitungen von dort zur Vermittlungsstelle zum Teil bereits Glasfasern, jedoch größtenteils bisher ebenfalls Kupfer-Doppeladern. Die Netze der Individualkommunikation sind im anwenderseitigen Zugangsbereich in beide Richtungen, d.h. vom Kunden weg und zum Kunden hin, zu benutzen, und der Kunde kann die zu übertragenden Daten (z.B. Telefon, Fax, Internet) selbst erzeugen.

Das gesteigerte Angebot an Leistungen der Verteilkommunikation, z.B. mehr Fernseh- und Radiokanäle, sowie im Bereich der Individualkommunikation, z.B. neue Telefonkonzepte, Internet und dergleichen, und die gesteigerte Nachfrage danach machen den Ausbau der bestehenden Netzwerke erforderlich. Nach dem gegenwärtigen Stand der Technik werden die bestehenden Netzwerkklassen jede für sich weiterentwickelt.

Es ist bekannt, die Leistungsfähigkeit des Breitbandkabel-Netzes zu erhöhen, indem es von der Zubringernetzebene zum Konzentrationspunkt um Glasfasern erweitert wird, die als Bypass zu den vorhandenen Kupfer-Koaxialkabeln fungieren und vornehmlich digitale Daten leiten. Damit können z.B. weitere Fernsehkanäle übermittelt werden. Diese zusätzlichen Kanäle werden im C-Verstärker zusammengeführt und von dort über das passive Kupferkabelnetz bei Erhöhung dessen Übertragungsrate, z.B. in einem ersten Schritt von 450 MHz auf 606 MHz, zum Kunden geführt. Diese Lösung der Breitbandkabel-Netzerweiterung wird als Hybrid Fibre/Coax bezeichnet.

Weiterhin ist bekannt, das Telefonnetz in kundennahen Bereichen und damit das Diensteangebot der Individualkommunikation durch den Einsatz von sogenannten Digital Subscriber Line-Systemen (DSL-Systeme) zu erweitern. Die vorhandene Infrastruktur des Telefonnetzes, Kupfer-Doppeladern und z.T Glasfasern, vom Netzknoten bzw. von der Vermittlungsstelle zum Kunden kann teilweise weiter genutzt werden. VDSL-Systeme ermöglichen Dienste mit einem Datentransport von bis zu 25 Mbit/s und große Bandbreiten, in beide Leitungsrichtungen (symmetrisch). Es werden Glasfasern als Transportmedium vom Netzknoten zum Kabelverzweiger benötigt, weshalb VDSL-Systeme daher Hybrid-Systeme mit Glasfaser- und Kupferleitungen sind. HDSL-Systeme sind für Dienste mit einem Datentransport von bis zu 2 Mbit/s symmetrisch geeignet, d.h. grundsätzlich auf Dienste der Individualkommunikation optimiert. ADSL-Systeme sind für Dienste mit einem Datentransport von bis zu 6 Mbit/s asymmetrisch mit einem Rückkanal mit einigen 10 Kbit/s ausgelegt. ADSL- und HDSL-Systeme können über Kupfer-Doppeladern von einem Netzknoten ohne weitere technische Maßnahmen im Kabelverzweiger, z.B. Zusammenkopplung verschiedenartiger Transportmedien, unmittelbar zum Kunden geführt werden.

Die Veröffentlichung "A flexible ATM-based access networks architecture" von T.J. Theimer et al., ISSLS. International Symposium on Subscriber Loops and Services, AU, Milsons Point, IREEA, Bd. Symp. 11, Seiten 245,250, offenbart eine Architektur eines Zugangsnetzwerks für die Anschaltung von Netzabschlüssen (Network Termination NT) an Zubringernetze (TMN, ATM Network, Narrowband Network) über einen Netzknoten (Access Node). Der Netzknoten ist imstande, eine Datenverbindung zu einem ersten Netzabschluss über ein passives optisches Netzwerk (passive optical network PON), zu einem zweiten Netzabschluss über eine Hybrid-Fiber/Koax-Verbindung (HFC) und zu einem dritten Netzabschluss über eine Funkstrecke (Radio) herzustellen.

Ein weiteres Beispiel des Standes der technick wird in Dokument US 5574364 offenbart.

Nachteilig am Stand der Technik ist, daß die beiden Einzelentwicklungen im Bereich der Verteil- und Individualkommunikation nicht konvergent sind und nicht miteinander harmonieren. Für den Netzbetreiber und damit auch für den Kunden bedeutet dies hohe Kosten, da beispielsweise Elemente, die für beide Netze benötigt werden, doppelt vorhanden sind und erhöhte Betriebs- und Wartungskosten entstehen.

Der Erfindung liegt deshalb die Aufgabe zugrunde, im Zugangsbereich die Konvergenz der Netze für Verteil- und Individualkommunikation herbeizuführen und das sich aus der Verschmelzung ergebende Potential für den Netzbetreiber wie für den Kuden zu nutzen. Die Grenzen zwischen Verteil- und Individualkommunikation sollen verwischt, die Leistungsfähigkeit des Netzzugangsbereichs erhöht und dadurch individuelle Zugriffsmöglichkeit auf alle Kommunikationsdienstleistungen geschaffen werden. Die Kapazität des Netzes für die Datenübertragung über das Internet soll im kundennahen Bereich erweitert werden.

Die Lösung der Aufgabe besteht in einem diensteintegrierenden Kommunikationsnetzwerk im Zugangsbereich für die Kombination von Diensten der Individualkommunikation, wie Telefon, Telefax, Internet oder dergleichen, mit Diensten der Verteilkommunikation, wie Fernsehen, Radio, Video oder dergleichen, der wenigstens
- einen Netzabschluß beim Kunden
- und einen Netzknoten zum Anschluß an ein oder mehrere langreichweitige Zubringernetze
- sowie entsprechende Leitungen - Glasfasern, Koaxialkabel, Kupferkabel, Kupferdoppeladerkabel oder dergleichen
aufweist, wobei der Zugangsbereich ferner einen kundennahen Leitungs-Konzentrationspunkt aufweist, der evtl. mit Verstärker- und Verteiltechnik ausgestattet ist, wobei der diensteintegrierende Zugangsbereich aus den Zugangsbereichen eines vorhandenen Indivdualkommunikationsnetzes, z.B. eines Telefonnetzes, und eines vorhandenen Verteilkommunikationsnetzes, z.B. eines Breitbandkabelnetzes, durch Auflösung der funktionellen Kopplung der Komponenten der Ausgangs-Zugangsbereiche untereinander innerhalb der jeweiligen Ausgangsnetze und Neukonfiguration zu einem diensteintegrierenden Zugangsbereich unter weitgehender Ausnutzung der Infrastruktur der Ausgangsnetze gebildet ist.

Gemäß einer Variante eines diensteintegrierenden Kommunikationsnetzwerk im Zugangsbereich für die Kombination von Diensten der Individualkommunikation, wie Telefon, Telefax, Internet oder dergleichen, mit Diensten der Verteilkommunikation, wie Fernsehen, Radio, Video oder dergleichen, besteht der Zugangsbereich wenigstens aus einem Netzabschluß beim Kunden, einem kundennahen Leitungs-Konzentrationspunkt, der evtl. mit Verstärker- und Verteiltechnik ausgestattet ist, und einem Netzknoten zum Anschluß an ein oder mehrere langreichweitige Zubringernetze sowie aus den entsprechenden Leitungen - Glasfasern, Koaxialkabel, Kupferkabel, Kupferdoppeladerkabel oder dergleichen -, wobei der diensteintegrierende Zugangsbereich aus den Zugangsbereichen eines vorhandenen Indivdualkommunikationsnetzes, z.B. eines Telefonnetzes, und eines vorhandenen Verteilkommunikationsnetzes, z.B. eines Breitbandkabelnetzes, durch Auflösung der funktionellen Kopplung der Komponenten der Ausgangs-Zugangsbereiche untereinander innerhalb der jeweiligen Ausgangsnetze und Neukonfiguration zu einem diensteintegrierenden Zugangsbereich unter weitgehender Ausnutzung der Infrastruktur der Ausgangsnetze gebildet ist.

Das passive Koaxialkabelnetzes des Breitbandnetzes kann erfindungsmäß als schnelles, lokales Rechnernetz mit überwiegend dezentraler Kommunikationssteuerung (klassisches "Local Area Network", LAN) verwendet werden. Dies impliziert eine Verwendung des passiven Koaxialkabelnetzes des Breitbandnetzes, als schnelles, lokales Rechnernetz mit überwiegend dezentraler Kommunikationssteuerung (klassisches "Local Area Network", LAN).

VDSL- und/oder ADSL-Techniken der Individualkommunikation können erfindungsgemäß zur Verteilkommunikation verwendet werden. Dies impliziert eine Verwendung von VDSL- und/oder ADSL-Techniken der Individualkommunikation zur Verteilkommunikation.

In vorteilhafter Weise sind die Ausgangsnetze im anwenderseitigen Netzzugangsbereich so zum Gesamtnetz zusammengefügt, daß die Infrastruktur der Ausgangsnetze so weit wie möglich genutzt wird, z.B. vorhandene Leitungen, Knotenpunkte, Schaltstellen und Logistik. Dies reduziert die Kosten der Leistungserweiterung durch den so gering wie möglich gehaltenen Materialaufwand. Ebenso werden im Vergleich zur separaten Weiterentwicklung der Netze Kosten reduziert, da nicht mehr zwei oder mehrere Netze getrennt verwaltet und gewartet werden müssen. Die einzelnen Dienste können über die jeweils vorhandenen Leitungen ohne Unterscheidung nach Individual- oder Verteilkommunikationsdienst übermittelt werden, so daß eine optimale Ausnutzung der vorhandenen Leitungskapazität erreicht werden kann.

In weiterer vorteilhafter Ausgestaltung der Erfindung sind der Netzabschluß beim Kunden und/oder der kundennahe Leitungs-Konzentrationspunkt in der Lage, miteinander zu interagieren. Damit kann der Kunde individuell auf alle Kommunikationsdienstleistungen, die entweder im Konzentrationspunkt oder im Netz, z.B. in der Vermittlungsstelle, bereitgehalten werden zugreifen. Die Leitungen vom Leitungs-Konzentrationspunkt zum Kunden hin werden daher nur mit den Daten und Diensten belastet, die der Kunde tatsächlich anfordert. Beispielhaft sei die ins Netz vorgelagerte Auswahl von TV- und/oder Radiokanälen oder von interaktiven Videodiensten aus dem Multimedia-Mix genannt.

Es ist weiterhin von Vorteil, die in der Individualkommunikation, insbesondere bei den Telefondienstleistungen, bekannten VDSL- und ADSL-Techniken samt der dazu vorhandenen Infrastruktur auch für die Verteilkommunikation zu nutzen. Dies ermöglicht beispielsweise ebenfalls eine Auswahl in der Programmvielfalt, da die im Telefonnetz verwendeten Leitungen - Kupferdoppeladern und z.T. Glasfasern - wenigstens teilweise die Kapazität auch zur Übertragung von Fernsehkanälen und ähnlichem sowie zur Übertragung einer Auswahlmitteilung vom Kunden zum Leitungs-Konzentrationspunkt haben.

Vorteilhaft werden sämtliche Dienste in einem Netzknoten aus den jeweiligen langreichweitigen Zubringernetzen in den erfindungsgemäßen kombinierten diensteinterierenden Zugangsbereich eingespeist bzw. laufen über diesen Netzknoten vom Kunden ins Zubringernetz, wobei der Netzknoten eine diensteintegrierende Kernplattform oder eine Ansammlung von Spezialplattformen darstellt. Er ist damit in der Lage, sowohl Daten der Verteilkommunikation als auch der Individualkommunikation zu empfangen und an den entsprechenden Kunden weiterzuleiten bzw. bestimmte vom Kunden angeforderte Dienste zur Weiterleitung freizugeben. Die Leitungen vom Netzknoten zum Konzentrationspunkt sind Glasfasern, Koaxialkabel oder Kupferdoppelleitungen der Ausgangsnetze, vorzugsweise jedoch Glasfaserkabel. Neu zur Kapazitätssteigerung verlegte Leitungen sind ebenfalls vorzugsweise Glasfasern, da mit diesen zur Zeit die größten Datenflüsse möglich sind. Über diese Leitungen werden sowohl Individual- als auch Verteilkommunikationsdaten zum Leitungs-Konzentrationspunkt übertragen, am dem somit sämtliche Daten und Dienste zur Verfügung gestellt und vom Kunden abgerufen werden können.

Eine Ausgestaltung der Erfindung sieht vor, die kundennahe Infrastruktur der Ausgangsnetze aufzulösen und neu so zu konfigurieren, daß Breitbanddienste über Glasfasern übermittelt werden, Dienste, die Übertragungsraten bis maximal 25 Mbit/s symmetrisch oder bis 50 Mbit/s asymmetrisch erfordern, über die DSL-Systeme des Telefonnetzes und gewöhnliche Telefon-/ISDN-Daten vornehmlich über Kupfer-Doppeladern übertragen werden. Insbesondere werden VDSL- und HDSL-Techniken auch zur Verteilkommunikation verwendet.

Eine weitere vorteilhafte Ausgestaltung der Erfindung sieht vor, das passive Kupfer-Koaxialkabelnetz, Teil des ursprünglichen Breitbandkabelnetzes, als klassisches Local Area Network (LAN) für Interaktionen, z.B. des Netzabschlusses beim Kunden mit dem Leitungs-Konzentrationspunkt oder der Netzabschlüsse untereinander (über den Leitungs-Konzentrationspunkt), weiterzuverwenden. Dazu werden zusätzlich zur vorhandenen Kabel-Hardware Systemtechnik mit vermittelnden, routenden bzw. LAN-unterstützenden Funktionen, z.B. in Form von Servern, sowie als Software Steuerungsprotokolle für die Anwendungsebene (Transmission Control Protocol TCP, Internet Protocol IP) benötigt und in dieser Ausgestaltung der Erfindung implementiert. Der Kunde kann damit auf Multimedia-Dienste verschiedener Klassen, insbesondere Internet, zugreifen.

Insgesamt ist bei der Erfindung die Trennung zwischen Individual- und Verteilkommunikation aufgehoben. Die bestehenden Leitungen der im Zugangsbereich funktionell aufgelösten Ausgangsnetze werden neu konfiguriert und auf die einzelenen Dienste entsprechend deren Bedarf an Leitungskapazität umverteilt. Es wird ein diensteintegrierender Zugangbereich des Zielnetzes aufgebaut, wobei die langreichweitigen Zubringernetze der Ausgangsnetze unverändert und getrennt bleiben. Durch Ausstattung des Netzabschlusses beim Kunden und/oder des Konzentrationspunktes mit Systemtechnik wird eine zusätzliche Flexibilität dieses Netzbereichs erreicht, das ursprünglich allein der Verteilkommunikation dienende Netz für Individualkommunikation, insbesondere durch die Umgestaltung des Koaxialkabelnetzes in ein LAN, und umgekehrt, z.B. TV-Kanäle über DSL-Techniken, genutzt und neuen Kommunikationstechniken das Feld geöffnet. Bei Verwendung der ursprünglichen Infrastruktur ist dieser Ansatz sowohl für den Kunden als auch für den Netzbetreiber kostengünstig und aufwandsarm.

Beispiele der Erfindung sind schematisch in der Zeichnung dargestellt und anschließend beschrieben. Dabei zeigen
- Figur 1: ein schematisches Diagramm eines diensteintegrierenden Netzzugangsbereichs (Prinzipskizze)
- Figur 2: ein Blockschaltbild eines diensteintegrierenden Zugangsbereich eines Kommunikationsnetzwerks mit einem Breitbandkabel-Netz und einem Telefonnetz als Ausgangsnetze

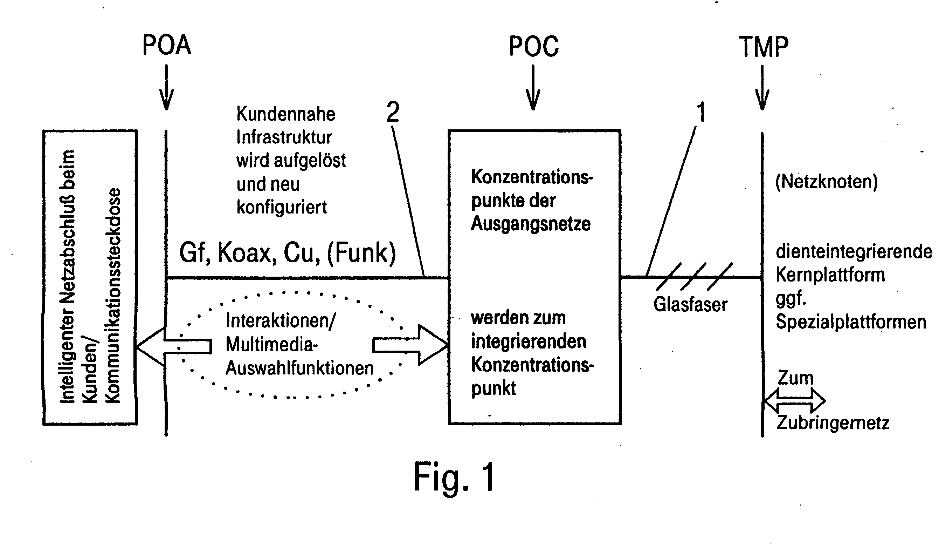

In Figur 1 ist schematisch als Prinzipskizze eines diensteintegrierenden Netzzugangsbereichs gezeigt, das aus der Zusammenführung der jeweiligen Zugangsbereiche von Netzen zur Individual- und Verteilkommunikation entstanden ist und sämtliche Kommunikationsdienste integriert. Der diensteintegrierende Zugangsbereich gliedert sich in einen Netzknoten TMP (Transmission Point), die die Verbindung des Zugangsbereichs mit dem langreichweitigen Zubringernetz herstellt, einen Leitungs-Konzentrationspunkt POC (Point of Concentration) und einen Netzabschluß beim Kunden POA (Point of Access) samt den Verbindungsleitungen 1, 2. Der Netzknoten TMP ist als diensteintegrierende Kernplattform oder als eine Ansammlung von Spezialplattformen zur Einspeisung der Daten in den diensteintegrierenden Zugangsbereich ausgestaltet. Der Leitungs-Konzentrationspunkt POC vereint die Konzentrationspunkte der Zugangsbereiche der Ausgangsnetze räumlich und koppelt die Ausgangsnetze im Zugangsbereich funktionell aneinander. Der Leitungs-Konzentrationspunkt POC und der Netzknoten TMP sind mit Glasfasern 1 verbunden. Der Netzabschluß beim Kunden POA stellt dem Kunden alle am Netzknoten TMP eingespeisten Kommunikationsdienstleistungen zur Verfügung. Er ist als universelle Kommunikationssteckdose ausgebildet. Vorzugsweise sind POA und/oder Leitungs-Konzentrationspunkt POC mit kommunikationsspezifischer Intelligenz bzw. Systemtechnik ausgestattet, über die sie miteinander zu kommunizieren in der Lage sind, was in der Zeichnung durch zwei Pfeile angedeutet ist. Die kundennahe Infrastruktur zum Datentransport, d.h. Leitungen 2, vom Leitungs-Konzentrationspunkt POC zum Netzabschluß beim Kunden POA wird aufgelöst und neu konfiguriert. Glasfaser-, Kupfer- und Koaxialkabel und gegebenenfalls Datenübertragung per Funk werden einer integrativen Nutzung für alle Kommunikationsdienstleistungen zugeführt.

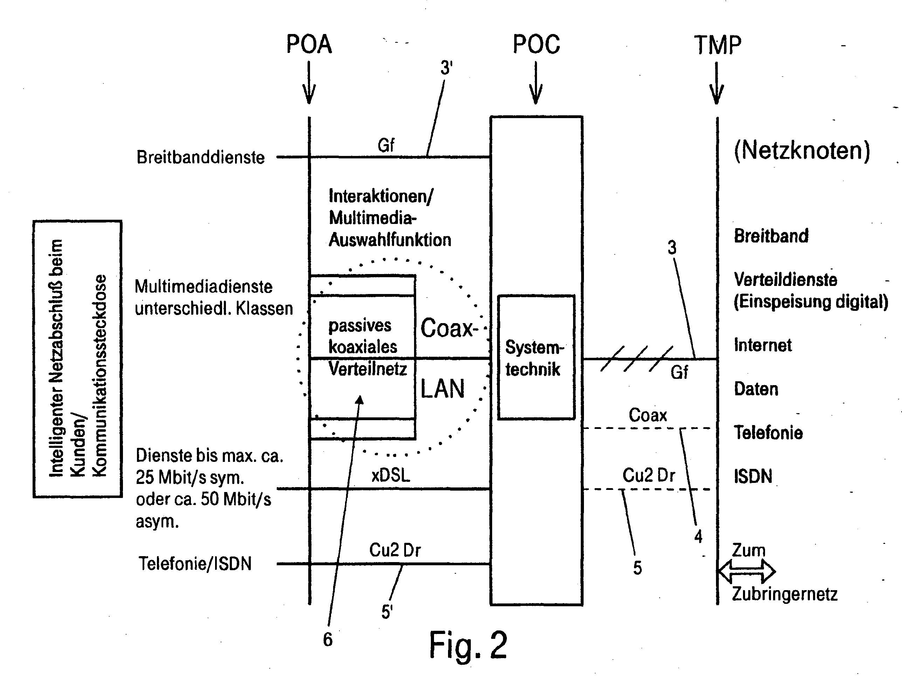

Figur 2 zeigt als Blockschaltbild ein Auführungsbeispiel der Erfindung auf der Basis des in Figur 1 dargestellten Schemas. Ein Breitbandkabelnetz zur Verteilkommunikation und ein Telefonnetz zur Individualkommunikation sind zu einem diensteintegrierenden Zugangsbereich des Zielnetzwerks zusammengefügt. Im Netzknoten TMP werden Breitband-Verteildienste, Internet-, Telefon- und ISDN-Daten aus dem Zubringernetz größtenteils digital in den diensteintegrierenden Zugangsbereich eingespeist. Vorzugsweise über Glasfaserkabel 3, die teilweise den Ausgangsnetzen entstammen, aber auch über die bereits in den Ausgangsnetzen vorhandenen Kupfer-Koaxialkabel 4 und Kupfer-Doppelleitungen 5 werden die Daten zum intergrierenden Konzentrationspunkt POC geleitet. Dieser ist mit Systemtechnik ausgestattet, mittels derer er mit dem Netzabschluß beim Kunden POA zu kommunizieren imstande ist. Der Netzabschluß beim Kunden POA ist als universelle Kommunikationssteckdose ausgebildet, die Breitbanddienste, Multimediadienste unterschiedlicher Klassen und Dienste der Individualkommunikation wie Telefon/ISDN zur Verfügung stellt. Dabei werden die Breitbanddienste vorzugsweise über Glasfasern 3', Telefon-/ISDN-Dienste über Kupfer-Doppelleitungen 5' und Dienste zur Individual- und/oder Verteilkommunikation mit einem Datentransport bis ca. 25 Mbit/s symmetrisch oder bis ca. 50 Mbit/s asymmetrisch unter Nutzung der DSL-Systeme des Telefonnetzes xDSL vom Leitungs-Konzentrtionspunkt POC zum Netzabschluß beim Kunden POA übertragen. Das ursprüngliche passive Koaxialkabelnetz 6 der Breitband-Verteilkommunikation ist in ein Lokales Rechennetzwerk LAN umgewandelt. Es wird für Multimedia-Dienste unterschiedlicher Klassen genutzt, z.B. für Internet-Kommunikation mehrer benachbarter Anwender ohne Umweg über den Netzknoten TMP. Im Leitungs-Konzentrtionspunkt POC oder im Netzabschluß beim Kunden POA ist Systemtechnik mit vermittelnden, routenden bzw. LAN-unterstützenden Funktionen, z.B. in Form von Servern, integriert, weiterhin sind Software-Steuerungsprotokolle für die Anwendungsebene (Transmission Control Protocol TCP, Internet Protocol IP) vorhanden.

Die zwischen Netzknoten TMP und Leitungs-Konzentrationspunkt POC und zwischen Leitungs-Konzentrtionspunkt POC und Netzabschluß beim Kunden POA verwendeten Leitungen 3, 3', 4, 5, 5', 6 sind vorzugsweise Leitungen der aufgelösten Ausgangsnetze, gegebenenfalls mit zusätzlichen neu verlegten Leitungen, vorzugsweise Glasfasern 3, 3', erweitert. Das Zielnetzwerk ist so konfiguriert, daß die einzelnen Leitungen mit Diensten belegt werden, die den jeweiligen Leitungen entsprechende Datentransportkapazität benötigen, beispielsweise werden Breitbanddienste am zweckmäßigsten mit Glasfasern übertragen.

## Patentansprüche

1. Diensteintegrierendes Kommunikationsnetzwerk im Zugangsbereich für die Kombination von Diensten der Individualkommunikation, wie Telefon, Telefax, Internet oder dergleichen, mit Diensten der Verteilkommunikation, wie Fernsehen, Radio, Video oder dergleichen, der wenigstens
- einen Netzabschluß beim Kunden (POA)
- und einen Netzknoten (TMP) zum Anschluß an ein oder mehrere langreichweitige Zubringernetze
- sowie entsprechende Leitungen (1, 2, 3, 3', 4, 5, 5', 6) - Glasfasern (1, 3, 3'), Koaxialkabel (4), Kupferkabel, Kupferdoppeladerkabel (5, 5') oder dergleichen
aufweist,
**dadurch gekennzeichnet, dass** der Zugangsbereich ferner einen kundennahen Leitungs-Konzentrationspunkt (POC) aufweist, der evtl. mit Verstärker- und Verteiltechnik ausgestattet ist, wobei der diensteintegrierende Zugangsbereich aus den Zugangsbereichen eines vorhandenen Indivdualkommunikationsnetzes, z.B. eines Telefonnetzes, und eines vorhandenen Verteilkommunikationsnetzes, z.B. eines Breitbandkabelnetzes, durch Auflösung der funktionellen Kopplung der Komponenten der Ausgangs-Zugangsbereiche untereinander innerhalb der jeweiligen Ausgangsnetze und Neukonfiguration zu einem diensteintegrierenden Zugangsbereich unter weitgehender Ausnutzung der Infrastruktur der Ausgangsnetze gebildet ist.

2. Diensteintegrierendes Kommunikationsnetzwerk im Zugangsbereich nach Anspruch 1, **dadurch gekennzeichnet,**
**daß** der kundennahe Leitungs-Konzentrationspunkt (POC) eine räumliche und funktionelle Kopplung wenigstens zweier schon bestehender Leitungs-Konzentrationspunkte der Ausgangsnetze, wie dem C-Verstärker des Breitbandkabelnetzes und der Kabelverzweigung des Telefonnetzes, ist und mit dem Netzabschluß beim Kunden (POA) zu interagieren imstande ist.

3. Diensteintegrierendes Kommunikationsnetzwerk im Zugangsbereich nach Anspruch 1 oder 2, **dadurch gekennzeichnet,**
**daß** der Netzabschluß beim Kunden (POA) als eine universelle Kommunikationssteckdose alle Informations- und Kommunikationsdienste bereitzustellen und mit dem kundennahen Leitungs-Konzentrationspunkt (POC) zu interagieren imstande ist, vorzugsweise derart, daß eine Vorauswahl der am Netzabschluß (POA) zur Verfügung gestellten Daten und Dienste einstellbar ist.

4. Diensteintegrierendes Kommunikationsnetzwerk im Zugangsbereich nach einem der vorangegangenen Ansprüche, **dadurch gekennzeichnet,**
**daß** Dienste der Verteilkommunikation wenigstens teilweise mittels DSL-Techniken, insbesondere ADSL-, VDSL und HDSL-Techniken, des Ausgangs-Individualkommunikationsnetzes übertragbar sind.

5. Diensteintegrierendes Kommunikationsnetzwerk im Zugangsbereich nach einem der vorangegangenen Ansprüche, **dadurch gekennzeichnet,**
**daß** die Leitungen (1, 3, 4, 5) vom Netzknoten (TMP) zum kundennahen Leitungs-Konzentrationspunkt (POC) Glasfaserleitungen (1, 3) sind, die wenigstens teilweise den Ausgangsnetzen entstammen.

6. Diensteintegrierendes Kommunikationsnetzwerk im Zugangsbereich nach einem der vorangegangenen Ansprüche, **dadurch gekennzeichnet,**
**daß** der Netzknoten (TMP) eine diensteintegrierende Kernplattform oder eine Ansammlung von Spezialplattformen darstellt, die die Daten, z.B. Breitbanddaten wie Fernsehen oder Radio, Internet, Telefon, ISDN und dergleichen ins Netz einzuspeisen imstande ist.

7. Diensteintegrierendes Kommunikationsnetzwerk im Zugangsbereich nach einem der vorangegangenen Ansprüche, **dadurch gekennzeichnet,**
**daß** das vorhandene Breitbandkabelnetz der Verteilkommunikation zu einem schnellen, lokalen Rechnernetz mit überwiegend dezentraler Kommunikationssteuerung klassische "Local Area Network", LAN, umkonfiguriert und mit Servern und Steuerungssoftware ergänzt ist.

8. Verfahren zur Bildung eines diensteintegrierenden Kommunikationsnetzerks im Zugangsbereich gemäß Anspruch 1, **dadurch gekennzeichnet,**
**dass** das passive Koaxialkabelnetz (6) des Breitbandnetzes, als schnelles, lokales Rechnernetz mit überwiegend dezentraler Kommunikationssteuerung (klassisches "Local Area Network", LAN) verwendet wird und/oder VDSL-und/oder ADSL-Techniken der Individualkommunikation zur Verteilkommunikation verwendet werden.

## Claims

1. A service integration communications network in the access region for the combination of individual communication services, such as telephone, telefax, internet or the like, with distributive communication services, such as television, radio, video or the like, comprising at least
- a network termination on the client side (POA)
- and a networking node (TMP) for connection to one or more wide range access networks
- as well as corresponding lines (1, 2, 3, 3', 4, 5, 5', 6) - glass fiber cables (1, 3, 3'), coaxial cables (4), copper cables, twisted-pair copper cables (5, 5') or the like,
**characterised in that** the access region further has a line concentration point (POC) close to the client side which is possibly equipped with amplification and distribution technology. wherein the service integration access region is formed from the access regions of an existing individual communications network, e.g. a telephone network, and an existing distributive communications network, e.g. a wideband cable network, respectively, by resolving the functional coupling of the components of the initial access regions in their respective initial networks and reconfiguring them to form a service integration access region by using the existing infrastructure of the initial networks to the maximum extent possible.

2. The service integration communications network in the access area according to claim 1, **characterised in that**
the line concentration point (POC) close to the client side is a spatial and functional coupling of at least two already existing line concentration points of the initial networks, such as the C amplifier of the wideband cable network and the cable junction of the telephone network, and is able to interact with the network termination (POA) on the client side.

3. The service integration communications network in the access area according to claim 1 or 2, **characterised in that**
the network termination at the client side (POA), as a universal communications socket, is able to provide all information and communication services and to interact with the line concentration point (POC) close to the client side, preferably in such a way that a pre-selection of the data and services provided at the network termination (POA) can be adjusted.

4. The service integration communications network in the access area according to any one of the preceding claims, **characterised in that**
the services of the distributive communication can at least in part be transmitted by means of DSL technologies, in particular by means of ADSL, VDSL and HDSL technologies, of the initial individual communications network.

5. The service integration communications network in the access area according to any one of the preceding claims, **characterised in that**
the lines (1, 3, 4, 5) from the network node (TMP) to the line concentration point (POC) close to the client side are glass fiber lines (1, 3) which at least partially have their origin in the initial networks.

6. The service integration communications network in the access area according to any one of the preceding claims, **characterised in that**
the network node (TMP) is a service integration core platform or a collection of specialised platforms able to feed the data, e. g. wideband data such as television or radio, internet, telephone, ISDN and the like, into the network.

7. The service integration communications network in the access area according to any one of the preceding claims, **characterised in that**
the existing wideband cable network of the distributive communication is reconfigured as a fast local computer network with mainly decentralised communications control (classic "Local Area Network", LAN) and completed with servers and control software.

8. A method of forming a service integration communications network in the access region according to claim 1, **characterised in that**
the passive coaxial cable network (6) of the wideband network is used as a fast local computer network with mainly decentralised communications control (classic "Local Area Network", LAN), and/or VDSL and/or ADSL technologies of individual communication are used for distributive communication.

## Revendications

1. Réseau de communication à intégration de services dans le domaine d'accès pour la combinaison de services de communication individuelle, tels que téléphone, télécopie, internet ou similaire, avec des services de la communication distribuée, tels que télévision, radio, vidéo ou similaire, comportant au moins
- une terminaison de réseau chez l'abonné (POA),
- un noeud de réseau (TMP) pour la connexion à un ou plusieurs réseaux d'amenée longue portée,
- des lignes correspondantes (1, 2, 3, 3', 4, 5, 5', 6) - fibres optiques (1, 3, 3'), câbles coaxiaux (4), câbles en cuivre, paires de fils de cuivre (5, 5') ou similaire,
**caractérisé en ce que** le domaine d'accès comporte en plus un point de concentration de lignes (POC) proche de l'abonné, le cas échéant équipé d'éléments d'amplification et de distribution, le domaine d'accès à intégration de services étant constitué des domaines d'accès d'un réseau de communication individuelle existant, tel qu'un réseau téléphonique, et d'un réseau de communication distribuée existant, tel qu'un réseau de câble à large bande, par résolution du couplage fonctionnel des composants des domaines d'accès de sortie entre eux au sein des réseaux de sortie respectifs et reconfiguration en domaine d'accès à intégration de services en utilisant en grande partie l'infrastructure des réseaux de sortie.

2. Réseau de communication à intégration de services dans le domaine d'accès selon la revendication 1, **caractérisé en ce que**
le point de concentration de lignes (POC) proche de l'abonné est un couplage spatial et fonctionnel de deux points de concentration de lignes déjà existants des réseaux de sortie, tels que l'amplificateur C du réseau de câble à large bande et le branchement du réseau téléphonique, et apte à interagir avec la terminaison de réseau chez l'abonné (POA).

3. Réseau de communication à intégration de services dans le domaine d'accès selon la revendication 1 ou 2, **caractérisé en ce que**
la terminaison de réseau chez l'abonné (POA), en tant que prise de communication universelle, est apte à fournir l'ensemble des services d'information et de communication et à interagir avec le point de concentration de lignes (POC) proche de l'abonné, de préférence de manière à permettre le réglage d'une présélection des données et services prévues au niveau de la terminaison de réseau (POA).

4. Réseau de communication à intégration de services dans le domaine d'accès selon l'une des revendications précédentes, **caractérisé en ce que**
des services de la communication distribuée sont aptes à être transmis au moins partiellement au moyen de techniques DSL, notamment de techniques ADSL, VDSL et HDSL du réseau de communication individuelle de sortie.

5. Réseau de communication à intégration de services dans le domaine d'accès selon l'une des revendications précédentes, **caractérisé en ce que** les lignes (1, 3, 4, 5) allant du noeud de réseau (TMP) au point de concentration de lignes (POC) proche de l'abonné sont des lignes de fibre optique (1, 3) provenant au moins partiellement des réseaux de sortie.

6. Réseau de communication à intégration de services dans le domaine d'accès selon l'une des revendications précédentes, **caractérisé en ce que**
le noeud de réseau (TMP) représente une plateforme centrale à intégration de services ou une concentration de plateformes spéciales apte à introduire les données, par exemple des données à large bande telles que la télévision ou la radio, l'internet, le téléphone, le RNIS et similaire dans le réseau.

7. Réseau de communication à intégration de services dans le domaine d'accès selon l'une des revendications précédentes, **caractérisé en ce que**
le réseau de câble à large bande existant de la communication distribuée est reconfiguré en un réseau local rapide d'ordinateurs à commande de communication essentiellement décentralisée (« Local Area Network » classique, LAN) et complété de serveurs et de logiciels de commande.

8. Procédé de création d'un réseau de communication à intégration de services dans le domaine d'accès selon la revendication 1, **caractérisé en ce que**
le réseau passif de câble coaxiaux (6) du réseau à large bande est utilisé comme réseau local rapide d'ordinateurs à commande de communication essentiellement décentralisée (« Local Area Network » classique, LAN) et/ou des techniques VDSL et/ou ADSL de la communication individuelle sont utilisées pour la communication distribuée.
